# EUROPÄISCHE PATENTANMELDUNG

(11) **EP 2 407 686 A2**
(43) Veröffentlichungstag der Anmeldung: **18.01.2012**
(21) Anmeldenummer: 11168506.1
(22) Anmeldetag: 01.06.2011
(51) Int. Cl.: F16F 9/04

(54) **Luftfederrollbalg mit partieller Versteifung**

(30) Priorität: 13.07.2010 DE 102010036365
(71) Anmelder: Continental Teves AG & Co. oHG, 60488 Frankfurt (DE)
(72) Erfinder: Nessel, Andreas, 30916 Isernhagen (DE); Rosner, Dirk, 30826 Garbsen (DE)

(57) **Zusammenfassung**

Luftfederrollbalg (1,8) aus elastomerem Material, der unter Innendruck frei stehend zwischen einem Luftfederdeckel (3,9) und einem Luftfeder-Abrollkolben (4,10) luftdicht eingespannt ist und unter Ausbildung von Rollfalten (5,6) am Luftfederkolben (4,10) und/oder am Luftfederdeckel (3,9) abrollt, wobei der Luftfederrollbalg (1,8) in einem Teilbereich seines Außenumfangs mit einer schalenförmigen Verstärkung (7,11) versehen ist.

## Beschreibung

Die Erfindung betrifft Luftfederrollbalg aus elastomerem Material, der unter Innendruck frei stehend zwischen einem Luftfederdeckel und einem Luftfederkolben/ Luftfeder-Abrollkolben luftdicht eingespannt ist und unter Ausbildung von Rollfalten am Luftfederkolben und/oder am Luftfederdeckel abrollt

Luftfedereinrichtungen, auch kurz Luftfedern genannt, die zwischen Fahrwerk und Karosserie eingespannt sind und die einen Luftfederbalg aufweisen, der wiederum zwischen einem Luftfederdeckel und einem Abrollkolben befestigt ist, sind in eine Vielzahl von Ausführungen bekannt. Die Luftfeder steht im Betrieb unter einem inneren Überdruck. Der Luftfederbalg rollt unter Last und bei Federbewegungen unter Bildung einer Rollfalte auf der Außenkontur des konzentrischen Luftfederkolbens/Abrollkolbens ab. Eine derartige Luftfeder wird häufig in Straßen- oder Schienenfahrzeugen eingesetzt, um eine komfortable Federung zu erreichen.

Dabei existieren sowohl Luftfedern, bei denen der Luftfederbalg nur einseitig eine Rollfalte bildet, nämlich in der Regel auf dem Abrollkolben, oder Luftfedern, bei denen der Rollbalg unter Bildung einer beidseitigen (Roll-)Falte zwischen Luftfederdeckel und Abrollkolben eingespannt ist. Luftfedern mit einseitiger Rollfalte sind oft in Pkw zu finden, während die oft größeren und tragfähigeren Luftfedern mit beidseitiger Rollfalte eher in LKW und Schienenfahrzeuge eingebaut werden.

Insbesondere freistehende Luftfederrollbälge mit dünneren Wänden unterliegen bei Bewegungen während des Einfederns, bei Lenkbewegungen oder bei auftretenden Querkräften der Gefahr des Einknickens. Um dies zu verhindern, werden im Stand der Technik die knickgefährdeten Umfangsbereiche von Rollbälgen bei deren Herstellung durch so genannte "Stützlagen" verstärkt. Dabei werden in diesen Umfangsbereichen des Rollbalgs zusätzliche Gummilagen oder Gewebelagen eingebracht und mit vulkanisiert. Die Steifigkeit solcher zusätzlichen Stützlagen ist jedoch temperaturabhängig, so dass auch mit dieser Maßnahme die Gefahr des Ausknickens nicht vollständig gebannt werden kann.

Aufgabe der Erfindung war es daher, einen Luftfederrollbalg bereitzustellen, bei dem mit einfachen Mitteln ein Ausknicken verhindert wird und der dadurch in seiner Funktion optimiert wird und eine lange Lebensdauer aufweist.

Gelöst wird diese Aufgabe durch die Merkmale des Hauptanspruchs. Weitere vorteilhafte Ausbildungen sind in den Unteransprüchen offenbart.

Dabei ist der Luftfederrollbalg in einem Teilbereich seines Außenumfangs mit einer schalenförmigen Verstärkung versehen, insbesondere mit einer solchen Verstärkung, die eine sphärische Krümmung aufweist, die der Krümmung des Luftfederrollbalges entspricht und die am Luftfederrollbalg anliegt.

Damit wird an den Stellen und Bereichen des Luftfederrollbalges, an denen der Kinematik und der Belastung zufolge ein eventuelles Ausknicken des Luftfederrollbalges zu erwarten wäre, letzteres sicher verhindert.

Eine vorteilhafte Ausbildung besteht darin, dass die schalenförmige Verstärkung den Luftfederrollbalg in Umfangsrichtung nur teilweise umgibt. Im Gegensatz zu den oft verwendeten hülsenartigen und nahezu die gesamte Luftfeder umfassenden Außenführungen kann hier gezielt der Bereich abgestützt werden, der knickgefährdet sein könnte, ohne das Gewicht des Luftfederrollbalg durch zusätzliche Gummilagen oder Gewebelagen zu erhöhen.

Eine weitere vorteilhafte Ausbildung besteht darin, dass die schalenförmige Verstärkung als dem Luftfederumfang bzw. Luftfederdurchmesser angepasster Rohrabschnitt, Rohrauschnitt oder angepasste Rohrschale ausgebildet ist. Ein solcher Rohrabschnitt, Rohrauschnitt oder eine Rohrschale ist leicht aus vorgefertigten Rohren herszustellen.

Eine weitere vorteilhafte Ausbildung besteht darin, dass die schalenförmige Verstärkung an den Luftfederrollbalg anvulkanisiert ist. Damit erleichtert sich der Herstell- und Montageprozess des gesamten Luftfederrollbalges mit der Verstärkung. Die Verstärkung wird dann bereits während der Herstellung des Luftfederrollbalges angebracht und muß nicht mehr separat montiert werden.

Eine weitere vorteilhafte, weil sehr einfach durchzuführende Ausbildung besteht darin, dass die schalenförmige Verstärkung an den Luftfederrollbalg geklemmt oder gekrimpt ist. Unter dem vom englischen "to crimp" abgeleiteten Begriff "Krimpen" versteht man ein Verformungsverfahren durch Eindrücken, Einformen, Falzen oder Kröpfen, mit dem u.a. auch Bauteile miteinander verbunden werden können.

Eine weitere vorteilhafte Ausbildung besteht darin, dass die schalenförmige Verstärkung unter Klemmung des Luftfederrollbalgs auf einen innerhalb des Rollbalgs befindlichen Ring aufgepresst oder gekrimpt ist. Dies gibt eine besonders sichere und mit ausreichend stabilem Gegenlager ausgebildete Klemmverbindung.

Aus Festigkeitsgründen besteht die schalenförmige Verstärkung vorteilhafterweise aus Metall. Natürlich sind auch entsprechend feste Kunststoffe gut geeignet, die zudem ein geringes Gewicht aufweisen.

Vorteilhafterweise weist die schalenförmige Verstärkung Aufnahmen zur Befestigung eines den Luftfederrollbalg umgebenden Faltenbalges auf. Insbesondere dann, wenn Luftfedern im Fahrwerksbereich von Fahrzeugen angeordnet sind, werden oft Faltenbälge eingesetzt, die die Luftfeder teilweise umgeben und mit denen z.B. die gegenüber Verschmutzungen empfindliche Rollfalte geschützt wird. Fremdkörper, wie etwa kleine hochgeschleuderte Steine oder Teerstücke aus dem Straßenbelag, könnten ansonsten die Gummihaut der Rollbalgfalte nämlich erheblich schädigen und die Lebensdauer verringern.

Besonders geeignet ist ein solcher Luftfederrollbalg für Luftfedereinrichtungen für ein Fahrzeug.

Anhand eines Ausführungsbeispieles soll die Erfindung näher erläutert werden. Es zeigen
Fig. 1 einen erfindungsgemäßen Luftfederrollbalg mit anvulkanisierter schalenförmiger Verstärkung
Fig. 2 eine weitere Ausführung eines erfindungsgemäßen Luftfederrollbalgs mit angeklemmter schalenförmiger Verstärkung

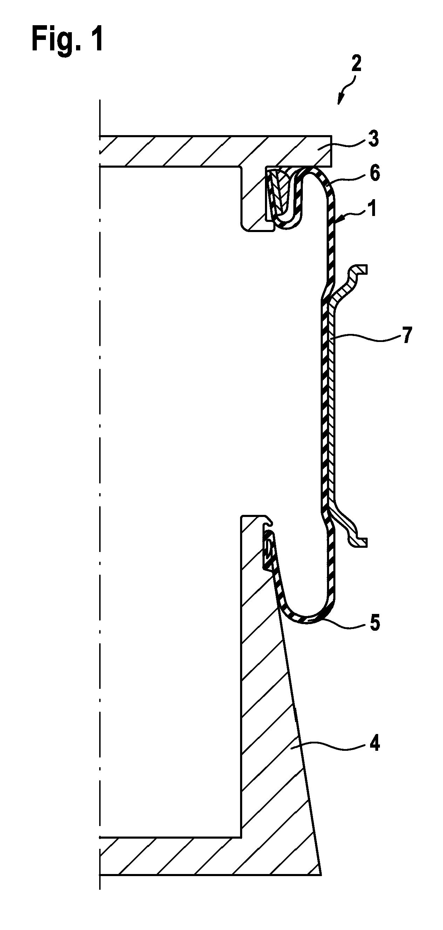

Die Figur 1 zeigt einen erfindungsgemäßen Luftfederrollbalg 1 einer Luftfedereinrichtung 2, bei der der Luftfederrollbalg frei stehend zwischen einem Luftfederdeckel 3 und einem Luftfederkolben 4 luftdicht eingespannt ist und unter Ausbildung von Rollfalten 5 und 6 am Luftfederkolben und am Luftfederdeckel abrollt, also als Luftfederrollbalg mit doppelter Rollfalte ausgebildet ist.

Der Luftfederrollbalg 1 weist eine schalenförmige Verstärkung 7 mit einer sphärischen Krümmung auf, die der Krümmung des Luftfederrollbalges 1 entspricht und die am Luftfederrollbalg 1 anliegt. Die schalenförmige Verstärkung 7 ist als Rohrschale ausgebildet und umgibt ― wenn hier auch nicht näher perspektivisch zeichnerisch dargestellt ― den Luftfederrollbalg in Umfangsrichtung nur teilweise, sodass lediglich eine minimale Erhöhung des Gewichts bzw. der Masse des Fahrzeugs entstehen kann.

In der in der Fig. 1 gezeigten Ausführung ist die schalenförmige Verstärkung 7 an den Luftfederrollbalg 1 anvulkanisiert.

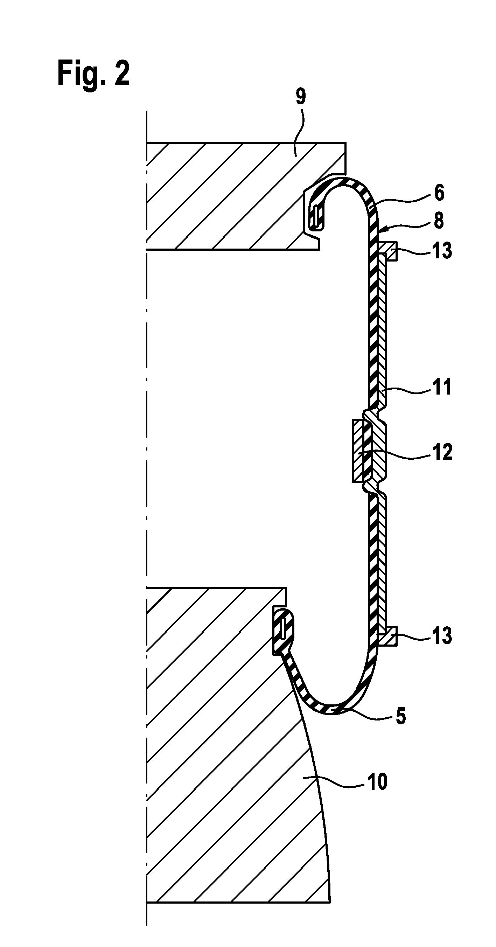

Fig. 2 zeigt eine weitere Ausführung eines erfindungsgemäßen Luftfederrollbalgs 8, der frei stehend zwischen einem Luftfederdeckel 9 und einem Luftfeder-Abrollkolben 10 luftdicht eingespannt ist und eine schalenförmige Verstärkung 11 mit einer sphärischen Krümmung aufweist, die der Krümmung des Luftfederrollbalges 8 entspricht und die am Luftfederrollbalg anliegt. Auch hier ist die schalenförmige Verstärkung 11 ist als Rohrschale ausgebildet und umgibt den Luftfederrollbalg in Umfangsrichtung nur teilweise.

Bei der in der Fig. 2 gezeigte Ausführung ist die schalenförmige Verstärkung 11 jedoch anders an den Luftfederrollbalg 8 angebunden. Die schalenförmige Verstärkung 11 ist unter Klemmung des Luftfederrollbalgs 8 auf einen innerhalb des Rollbalgs befindlichen Metallring 12 aufgepresst und am oberen und unteren Rand des Metallringes um letzteren gekrimpt. Der elastische Luftfederrollbalg folgt dabei der Krimp-Form in diesem Bereich. Die schalenförmige Verstärkung 12 besteht aus Aluminiumblech und weist an ihrem oberen und unteren Rand Aufnahmen 13 zur Befestigung eines den Luftfederrollbalg umgebenden, jedoch hier nicht näher dargestellten Faltenbalgs auf.

### Bezugszeichenliste

### (Teil der Beschreibung)

1 Luftfederrollbalg
2 Luftfedereinrichtung
3 Luftfederdeckel
4 Luftfederkolben
5 Rollfalte
6 Rollfalte
7 Schalenförmige Verstärkung
8 Luftfederrollbalg
9 Luftfederdeckel
10 Luftfederkolben
11 Schalenförmige Verstärkung
12 Metallring
13 Aufnahmen für Faltenbalg

## Patentansprüche

1. Luftfederrollbalg (1, 8) aus elastomerem Material, der unter Innendruck frei stehend zwischen einem Luftfederdeckel (3, 9) und einem Luftfederkolben (4, 10) luftdicht eingespannt ist und unter Ausbildung von Rollfalten (5,6) am Luftfederkolben (4, 10) und/oder am Luftfederdeckel (3, 9) abrollt, **dadurch gekennzeichnet, dass** der Luftfederrollbalg (1, 8) in einem Teilbereich seines Außenumfangs mit einer schalenförmigen Verstärkung (7, 11) versehen ist.

2. Luftfederrollbalg nach Anspruch 1, bei dem die schalenförmige Verstärkung (7, 11) eine sphärische Krümmung aufweist, die der Krümmung des Luftfederrollbalges (1, 8) entspricht und die Verstärkung am Luftfederrollbalg anliegt.

3. Luftfederrollbalg nach Anspruch 1 oder 2, bei dem die schalenförmige Verstärkung (7, 11) den Luftfederrollbalg in Umfangsrichtung nur teilweise umgibt.

4. Luftfederrollbalg nach einem der Ansprüche 1 bis 3, bei dem die schalenförmige Verstärkung (7, 11) als Rohrabschnitt, Rohrauschnitt oder Rohrschale ausgebildet ist.

5. Luftfederrollbalg nach einem der Ansprüche 1 bis 4, bei dem die schalenförmige Verstärkung (7) an den Luftfederrollbalg (1) anvulkanisiert ist.

6. Luftfederrollbalg nach einem der Ansprüche 1 bis 4, bei dem die schalenförmige Verstärkung (11) an den Luftfederrollbalg (8) geklemmt und/oder gekrimpt ist.

7. Luftfederrollbalg nach Anspruch 6, bei dem die schalenförmige Verstärkung (11) unter Klemmung des Luftfederrollbalgs (8) auf einen innerhalb des Luftfederrollbalgs (8) befindlichen Ring (12) aufgepresst und/oder gekrimpt ist.

8. Luftfederrollbalg nach einem der Ansprüche 1 bis 7, bei dem die schalenförmige Verstärkung (7, 11) aus Metall besteht.

9. Luftfederrollbalg nach einem der Ansprüche 1 bis 8, bei dem die schalenförmige Verstärkung (7, 11) Aufnahmen zur Befestigung eines den Luftfederrollbalg umgebenden Faltenbalges aufweist.

10. Luftfedereinrichtung für ein Fahrzeug mit einem Luftfederrollbalg nach einem der Ansprüche 1 bis 9.
